# EUROPEAN PATENT APPLICATION

(11) **EP 4 769 718 A1**
(43) Date of publication of application: **01.07.2026**
(21) Application number: 25768524.8
(22) Date of filing: 20.02.2025
(51) Int. Cl.: H01M 50/242, H01M 50/55, H01M 50/566, H01M 50/569

(54) **BATTERY CELL ASSEMBLY AND METHOD FOR MANUFACTURING SAME**

(30) Priority: 07.03.2024 KR 20240032798
(71) Applicant: LG Energy Solution, Ltd., Seoul 07335 (KR)
(72) Inventor: JANG, Byung Do, Daejeon 34122 (KR)
(74) Representative: BCKIP Part mbB
(86) International application number: PCT/KR2025/002392
(87) International publication number: WO 2025/188000

(57) **Abstract**

Embodiments provide a battery cell assembly. The battery cell assembly includes a plurality of battery cells arranged in a first direction and an integrated circuit assembly covering the plurality of battery cells, in which the integrated circuit assembly includes an insulating frame including an insulating material and an integrated circuit mounted on the insulating frame and configured to be electrically connected to the plurality of battery cells, the insulating frame includes a first side facing the plurality of battery cells, and the first side is rib-free.

## Description

### [Technical Field]

The present disclosure relates to a battery cell assembly and a manufacturing method thereof. The present application claims the benefit of priority based on Korean Patent Application No. 10-2024-0032798, filed on March 7, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present disclosure is directed to providing a battery cell assembly with improved safety when external impact is applied thereto, and a manufacturing method thereof.

### [Technical Solution]

Embodiments of the present disclosure provide a battery cell assembly. The battery cell assembly includes a plurality of battery cells arranged in a first direction and an integrated circuit assembly covering the plurality of battery cells, in which the integrated circuit assembly includes an insulating frame including an insulating material and an integrated circuit mounted on the insulating frame and configured to be electrically connected to the plurality of battery cells, the insulating frame includes a first side facing the plurality of battery cells, and the first side is rib-free.

The insulating frame may include a plurality of terminal support portions that are on the first side and are arranged in the first direction, and each of the plurality of terminal support portions may include a through-hole.

Each of the plurality of terminal support portions may include an inside wall defining the through-hole, and the inside wall of each of the plurality of terminal support portions may be solid.

Each of the plurality of battery cells may include a positive electrode terminal and a negative electrode terminal, and each of the plurality of terminal support portions may overlap the positive electrode terminal and the negative electrode terminal of corresponding ones of the plurality of battery cells in a second direction perpendicular to the first direction.

A length of the through-hole in a third direction perpendicular to the first and second directions may be the same as a length of each of the plurality of terminal support portions in the third direction.

The insulating frame may include a plurality of interposed parts that are on the first side and alternated with the plurality of terminal support parts in the first direction.

The integrated circuit assembly may be mounted on a second side of the insulating frame opposite to the first side, and the insulating frame may include a plurality of ribs on the second side.

The plurality of ribs may overlap the plurality of interposed portions.

Embodiments provide a manufacturing method of a battery cell assembly. The method includes: assembling a plurality of battery cells and an integrated circuit assembly together; inserting a reinforcing pin into a through-hole of an insulating frame of the integrated circuit assembly, in which a length of the reinforcing pin is greater than a length of the insulating frame; and welding positive electrode terminals and negative electrode terminals of the plurality of battery cells.

The plurality of battery cells may be arranged in a first direction, and the reinforcing pin may overlap the positive electrode terminals and the negative electrode terminals of the plurality of battery cells in a second direction perpendicular to the first direction.

Embodiments provide a battery cell assembly. The battery cell assembly includes a plurality of battery cells arranged in a first direction, a first integrated circuit assembly including a first insulating frame including an insulating material and a first integrated circuit mounted on the first insulating frame and configured to be electrically connected to the plurality of battery cells, and a second integrated circuit assembly including a second insulating frame including an insulating material and a second integrated circuit mounted on the second insulating frame and configured to be electrically connected to the plurality of battery cells, in which the first insulating frame includes a first side facing the plurality of battery cells and a second side opposite to the first side, the first side is rib-free, the second insulating frame includes a third side facing the plurality of battery cells and a fourth side opposite to the third side, and the third side is rib-free.

The first insulating frame may include a plurality of first terminal support portions that are on the first side and are arranged in the first direction, each of the plurality of first terminal support portions may include a first through-hole, the second insulating frame may include a plurality of second terminal support portions that are on the third side and are arranged in the first direction, and each of the plurality of second terminal support portions may include a second through-hole.

Each of the plurality of first terminal support portions may include a first inside wall defining the first through-hole, the first inside wall of each of the plurality of first terminal support portions may be solid, each of the plurality of second terminal support portions may include a second inside wall defining the second through-hole, and the second inside wall of each of the plurality of second terminal support portions may be solid.

The first and second integrated circuit assemblies may be spaced apart from each other in a second direction perpendicular to the first direction, each of the plurality of battery cells may include a positive electrode terminal and a negative electrode terminal, and each of the plurality of first and second terminal support portions may overlap the positive electrode terminal and the negative electrode terminal of corresponding ones of the plurality of battery cells in the second direction perpendicular to the first direction.

A length of the first through-hole in a third direction perpendicular to the first and second directions may be the same as a length of each of the plurality of first terminal support portions in the third direction, and a length of the second through-hole in the third direction may be the same as a length of each of the plurality of second terminal support portions in the third direction.

### [Advantageous Effects]

According to embodiments of the present disclosure, a battery cell assembly includes a plurality of battery cells and an insulating frame including a rib-free first side facing the plurality of battery cells. Accordingly, it is possible to prevent damage to the plurality of battery cells even when external impact is transmitted to the battery cell assembly.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a plan view of a battery pack according to embodiments.
FIG. 2 is a perspective view of a battery cell assembly of FIG. 1.
FIG. 3 is a front view of the battery cell assembly of FIG. 2.
FIG. 4 is a perspective view of a first insulating frame of a battery cell assembly.
FIG. 5 is a plan view of a first insulating frame of a battery cell assembly.
FIG. 6 is a perspective view of a first insulating frame of a battery cell assembly.
FIG. 7 is a plan view of a first insulating frame of a battery cell assembly.
FIG. 8 is a flowchart of a method of providing a battery cell assembly according to embodiments.
FIGS. 9 and 10 are perspective views for describing a method of providing a battery cell assembly according to embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

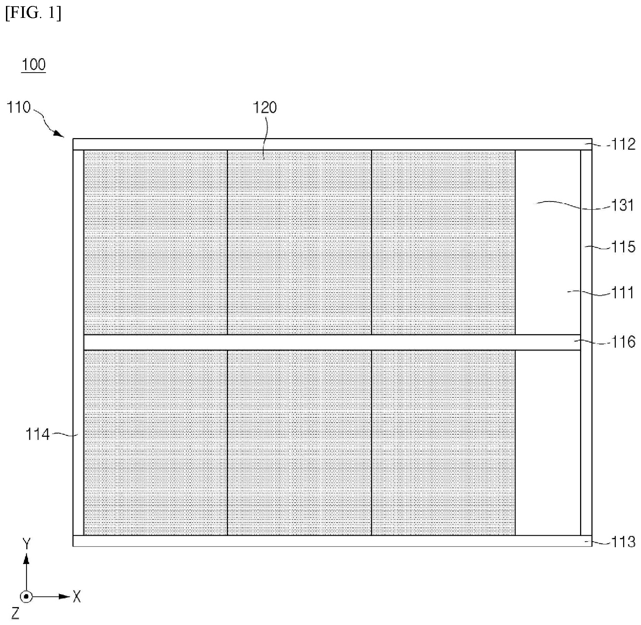

FIG. 1 is a plan view of a battery pack according to embodiments.

Referring to FIG. 1, a battery pack 100 may include a pack housing 110 and a plurality of battery cell assemblies 120. The battery pack 100 may be a final product to be mounted in an application such as a vehicle.

The pack housing 110 may provide a space for mounting the battery cell assemblies 120 therein. The pack housing 110 may include a base plate 111 and side walls 112, 113, 114, and 115.

Here, two directions substantially parallel to a mounting surface (i.e., a surface facing the battery cell assembly 120) of the base plate 111 are defined as an X-axis direction and a Y-axis direction, and a direction substantially perpendicular to the mounting surface of the base plate 111 is defined as a Z-axis direction. The X-axis direction, the Y-axis direction, and the Z-axis direction may be substantially perpendicular to one another.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

Hereinafter, the technical idea of the present disclosure will be described with respect to an embodiment in which the battery pack 100 is of a moduleless type and each of the plurality of battery cell assemblies 120 does not include a module frame, but the embodiment is only an example and does not limit the technical idea of the present disclosure in any sense. Those of ordinary skill in the art will be able to easily derive an embodiment in which a battery pack is of a module type and each of a plurality of battery cell assemblies includes a module frame, based on the above description.

Thermal interface material (TIM) layers may be provided between the base plate 111B of the pack housing 110 and the plurality of battery cell assemblies 120. The TIM layers may include a resin composition. The TIM layers may be provided by a process of applying a thermal resin.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

The center beam 116 may extend in the X-axis direction. The center beam 116 may isolate the plurality of battery cell assemblies 120 in the Y-axis direction. The center beam 116 may be interposed between the plurality of battery cell assemblies 120.

In FIG. 1, the plurality of battery cell assemblies 120 may be arranged in a 3x2 array. The arrangement of the plurality of battery cell assemblies 120 of FIG. 1 is a non-limiting example and should not be understood as limiting the technical idea of the present disclosure in any sense. Those of ordinary skill in the art will be able to easily derive the plurality of battery cell assemblies 120 arranged in an MxN array (here, M and N are each an integer of 2 or more), based on the above description.

The battery pack 100 may further include a lid coupled to the side walls 112, 113, 114, and 115 of the pack housing 110. The lid may cover elements, such as the battery cell assemblies 120 and electronic components, inside the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, and is uncontrollable positive feedback. A temperature of the plurality of battery cell assemblies 120 that are in a thermal runaway state sharply increases, and a large amount of a high-pressure gas and combustion debris are discharged therefrom.

The battery pack 100 may further include a battery management system (BMS). The BMS may be configured to monitor, balance, and control the battery pack 100. The monitoring of the battery pack 100 may include monitoring voltages and currents of certain nodes in the plurality of battery cell assemblies 120 and monitoring a distribution of temperatures at set positions in the battery pack 100.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs. The additional electronic components may be interposed between the plurality of battery cell assemblies 120 and the side wall 115. A space between the battery cell assemblies 120 and the side wall 115 may be referred to as an electronic component mounting area.

The battery pack 100 may further include a plurality of inter-bus bars configured to electrically connect the plurality of battery cell assemblies 120. The plurality of battery cell assemblies 120 may be connected in series via the plurality of inter-bus bars. Accordingly, the battery pack 100 may be configured to output a high voltage to an external load (e.g., a motor of a vehicle).

### (Second embodiment)

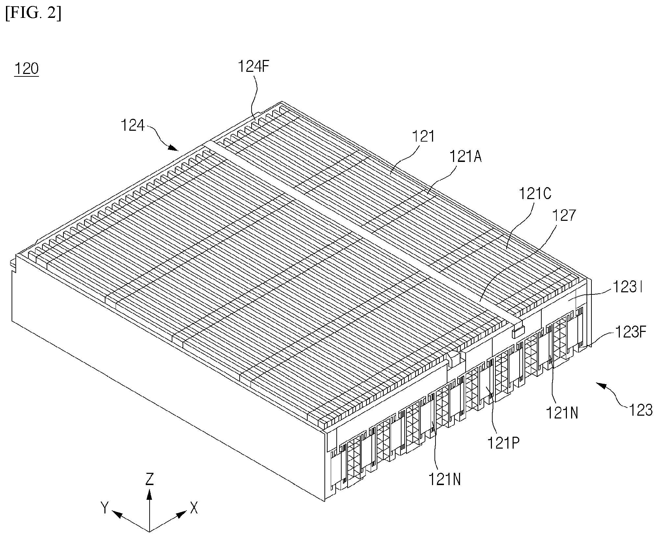

FIG. 2 is a perspective view of the battery cell assembly 120 of FIG. 1.

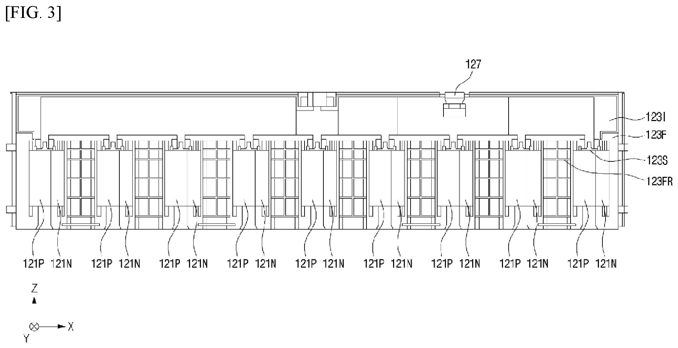

FIG. 3 is a front view of the battery cell assembly 120 of FIG. 2.

In FIGS. 2 and 3, the definition of the X-axis direction, the Y-axis direction, and the Z-axis direction is based on a case in which the battery cell assembly 120 is on the pack housing 110 (see FIG. 1). In FIGS. 2 and 3, the X-axis direction may be a direction in which a plurality of battery cells 121 are arranged, the Y-axis direction may be a direction in which a first integrated circuit assembly 123 and a second integrated circuit assembly 124 are spaced apart from each other, and the Z-axis direction may be substantially perpendicular to each of the X-axis direction and the Y-axis direction.

Referring to FIGS. 2 and 3, each of the plurality of battery cell assemblies 120 may include a plurality of battery cells 121, a first integrated circuit assembly 123, a second integrated circuit assembly 124, and flexible flat cable (FFC) assemblies 127.

Each of the plurality of battery cells 121 may be a lithium ion battery. The plurality of battery cells 121 may be arranged in the X-axis direction. The plurality of battery cells 121 may include a case 121C, an electrode assembly, a positive electrode terminal 121P, a negative electrode terminal 121N, and a folding tape 121A. The battery cell 121 may further include an electrolyte.

According to embodiments, the battery cell 121 may include a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet. Hereinafter, the technical idea of the present disclosure will be described with respect to an example in which the battery cell 121 includes a pouch type battery cell but those of ordinary skill in the art will be able to easily derive an example in which the battery cell 121includes a cylindrical battery cell or an prismatic battery cell based on the description herein.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

In a stack type electrode assembly, a plurality of positive electrodes and a plurality of negative electrodes may be arranged in the X-axis direction. In a stack type electrode assembly, a plurality of positive electrodes and a plurality of negative electrodes may be stacked in the X-axis direction.

Each of a plurality of positive electrodes of the electrode assembly may include a positive electrode tab. The positive electrode tab of each of the plurality of positive electrodes of the electrode assembly may be short-circuited with the positive electrode terminal 121P. The positive electrode tab of each of the plurality of positive electrodes of the electrode assembly may be welded with the positive electrode terminal 121P.

Each of a plurality of negative electrodes of the electrode assembly may include a negative electrode tab. The negative electrode tab of each of the plurality of negative electrodes of the electrode assembly may be short-circuited with the negative electrode terminal 121N. The negative electrode tab of each of the plurality of negative electrodes of the electrode assembly may be welded with the negative electrode terminal 121N.

The case 121C may include an inner resin layer, a metal layer, and an outer resin layer. An adhesive and an anti-corrosion layer may be further provided between the inner resin layer and the metal layer and between the outer resin layer and the metal layer.

The inner resin layer may have thermal adhesion and be referred to as a sealant layer. The inner resin layer may provide sealing of the case 121C. The inner resin layer may include, for example, a polyolefin-based resin such as polypropylene (PP) and polyethylene (PE). The metal layer may include an alloy of iron, carbon, chromium and manganese, an alloy of iron, chromium and nickel, or aluminum. The metal layer may be a gas barrier. The metal layer may block the entry and exit of a gas through the case 121C. The outer resin layer may be a surface protective layer. The outer resin layer may include a material having wear resistance and heat resistance, such as a nylon resin.

The case 121C may be provided by sealing a single pouch film or by bonding two pouch films. The case 121C may include a bowl-shaped storage part formed by a pouch forming process and a terrace surrounding the storage part. The positive electrode terminal 121P and the negative electrode terminal 121N may protrude from the case 121C in the Y-axis direction. The positive electrode terminal 121P and the negative electrode terminal 121N may be spaced apart from each other in the Y-axis direction.

Hereinafter, the technical idea of the present disclosure will be described with respect to an example in which the battery cell 121 is a bidirectional cell in which the positive electrode terminal 121P and the negative electrode terminal 121N are formed on opposite sides. Those of ordinary skill in the art will be able to easily derive a battery cell assembly including unidirectional battery cells, based on the description herein.

A sealing part of the case 121C may be fixed to a side of the case 121C via the folding tape 121A. By the application of the folding tape 121A, the sealing part may be folded to be in contact with the side of the case 121C.

The plurality of battery cells 121 may form a plurality of banks. The battery cells 121 of each of the plurality of banks may be connected to each other in parallel. That is, the positive electrode terminals 121P of the battery cells 121 of each of the banks may be short-circuited with each other, and the negative electrode terminals 121N of the battery cells 121 of each of the banks may be short-circuited with each other. According to embodiments, the positive electrode terminals 121P of the battery cells 121 of each of the banks may be welded to each other, and the negative electrode terminals 121N of the battery cells 121 of each of the banks may be welded to each other.

The negative electrode terminals 121N of the battery cells 121 of each of the banks may be short-circuited with the positive electrode terminals 121P of the battery cells 121 of a subsequent bank. The negative electrode terminals 121N of the battery cells 121 of each of the banks may be welded with the positive electrode terminals 121P of the battery cells 121 of the subsequent bank.

The positive electrode terminals 121P of the battery cells 121 of each of the banks may be short-circuited with the negative electrode terminals 121N of the battery cells 121 of a preceding bank. The positive electrode terminals 121P of the battery cells 121 of each of the banks may be welded with the negative electrode terminals 121N of the battery cells 121 of the preceding bank.

The plurality of battery cells 121 may be arranged in the X-axis direction. A plurality of pads may be provided between the plurality of battery cells 121. The plurality of pads may horizontally press the plurality of battery cells 121 and prevent or alleviate the swelling of the plurality of battery cells 121. The plurality of pads may isolate the plurality of battery cells 121 from each other. According to embodiments, each of the plurality of pads may include polyurethane (PU). According to embodiments, each of the plurality of pads may include a fire-resistant material such as a silicone.

According to embodiments, the plurality of pads and the plurality of banks may be alternately arranged. According to embodiments, one of the plurality of banks may be interposed between neighboring pads, and one of the other pads may be interposed between neighboring banks. According to other embodiments, two or more banks may be interposed between neighboring pads.

The first integrated circuit assembly 123 and the second integrated circuit assembly 124 may be spaced apart from each other in the Y-axis direction with the plurality of battery cells 121 interposed therebetween. The first integrated circuit assembly 123 and the second integrated circuit assembly 124 may be electrically connected to each other via the FFC assemblies 127. Accordingly, sensed values (e.g., a voltage, current, and/or temperature) of the second integrated circuit assembly 124 may be transmitted to the first integrated circuit assembly 123 through the FFC assemblies 127.

The first integrated circuit assembly 123 may include an insulating frame 123F, an integrated circuit 123I, and sensing plates 123S. The insulating frame 123F may include an insulating material such as plastic. The insulating frame 123F may cover front sides of the plurality of battery cells 121. The insulating frame 123F may support the integrated circuit 123I and the sensing plates 123S.

The integrated circuit 123I may be mounted on the insulating frame 123F. The positive electrode terminals 121P and the negative electrode terminals 121N that are welded to each other may form nodes inside the battery cell assembly 120. The integrated circuit 123I may be configured to measure voltages of the nodes.

Each of the plurality of sensing plates 123S may be coupled to the insulating frame 123S. Each of the plurality of sensing plates 123S may be in contact with the insulating frame 123S. Each of the plurality of sensing plates 123S may be fixed to the insulating frame 123S by interference fit or the like.

Each of the plurality of sensing plates 123S may have a patch shape or a pad shape. The plurality of sensing plates 123S may include a conductive material. The plurality of sensing plates 123S may be short-circuited to corresponding ones of the positive electrode terminals 121P and the negative electrode terminals 121N of the plurality of battery cells 121. For example, the plurality of sensing plates 123S may be short-circuited to the positive electrode terminals 121P of the battery cells 121 of an odd-numbered bank and the negative electrode terminals 121N of the battery cells 121 of an even-numbered bank.

The plurality of sensing plates 123S may be covered by corresponding ones of the positive electrode terminals 121P and the negative electrode terminals 121N of the plurality of battery cells 121. For example, the plurality of sensing plates 123S may be covered by the positive electrode terminals 121P of the battery cells 121 of an odd-numbered bank and the negative electrode terminals 121N of the battery cells 121 of an even-numbered bank. The plurality of sensing plates 123S may be interposed between the positive electrode terminals 121P, the negative electrode terminals 121N, and the first insulating frame 123F.

The plurality of sensing plates 123S may be in contact with corresponding ones of the positive electrode terminals 121P and the negative electrode terminals 121N of the plurality of battery cells 121. For example, the plurality of sensing plates 123S may be in contact with the positive electrode terminals 121P of the battery cells 121 of the odd-numbered bank and the negative electrode terminals 121N of the battery cells 121 of the even-numbered bank.

The plurality of sensing plates 123S may be fixed to the corresponding ones of the positive electrode terminals 121P and the negative electrode terminals 121N of the plurality of battery cells 121. For example, the plurality of sensing plates 123S may be fixed to the positive electrode terminals 121P of the battery cells 121 of the odd-numbered bank and the negative electrode terminals 121N of the battery cells 121 of the even-numbered bank.

The plurality of sensing plates 123S may be welded to the corresponding ones of the positive electrode terminals 121P and the negative electrode terminals 121N of the plurality of battery cells 121. For example, the plurality of sensing plates 123S may be welded to the positive electrode terminals 121P of the battery cells 121 of the odd-numbered bank and the negative electrode terminals 121N of the battery cells 121 of the even-numbered bank.

Bus bars may further be coupled to the insulating frame 123F. The bus bars may be short-circuited to the positive electrode terminals 121P of one or more battery cells 121 of a first bank and the negative electrode terminals 121N of one or more battery cells 121 of a last bank. The bus bars may be welded to the positive electrode terminals 121P of the one or more battery cells 121 of the first bank and the negative electrode terminals 121N of the one or more battery cells 121 of the last bank. Resulting voltages of the plurality of battery cells 121 may be output through the bus bars. The bus bars may be fixed to the insulating frame 123F.

An insulating cover may further be coupled to the insulating frame 123F. The insulating cover may include an insulating material such as plastic. The insulating cover may be interference-fitted into the insulating frame 123F. The insulating cover may cover the integrated circuit 123I and the sensing plates 123S and thus electrical elements of the first integrated circuit assembly 123 may be protected.

The second integrated circuit assembly 124 may include a second insulating frame 124F, an integrated circuit, and sensing plates. The second integrated circuit assembly 124 is substantially the same as the first integrated circuit assembly 123, except that the second integrated circuit assembly 124 does not include bus bars.

Accordingly, the sensing plates of the second integrated circuit assembly 124 may be coupled to the second insulating frame 124F, covered by corresponding positive electrode terminals 121P and negative electrode terminals 121N, and welded to the corresponding positive electrode terminals 121P and negative electrode terminals 121N. The sensing plates of the second integrated circuit assembly 124 may be interposed between the positive electrode terminals 121P, the negative electrode terminals 121N and the second insulating frame 124F.

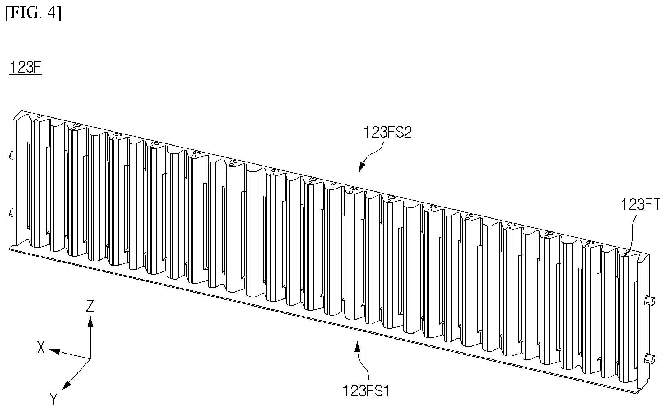

FIG. 4 is a perspective view of the first insulating frame 123F of the battery cell assembly 120.

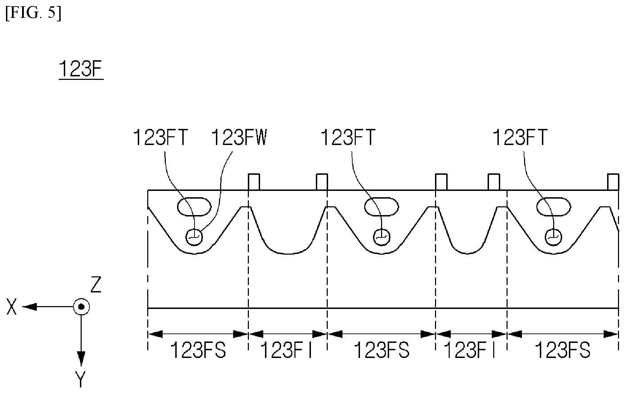

FIG. 5 is a plan view of a first insulating frame 123F of a battery cell assembly 120.

Referring to FIGS. 2 to 5, the first insulating frame 123F may include a plurality of first terminal support portions 123FS and a plurality of first interposed portions 123FI. The plurality of first terminal support portions123FS may be arranged in the X-axis direction. The plurality of first interposed portions 123FI may be arranged in the X-axis direction. The plurality of first terminal support portions 123FS and the plurality of first interposed portions 123FI may be alternated in the X-axis direction. One of the plurality of first interposed portions 123FI may be interposed between two adjacent first terminal support portions 123FS. One of the first terminal support portions 123FS may be interposed between two adjacent first interposed portions 123FI.

The plurality of first support portions 123FS and the plurality of first interposed portions 123FI may be on a first side 123FS1 of the first insulating frame 123F. The first side 123FS1 may face the plurality of battery cells 121. The first side 123FS1 may face the pouch case 121C of each of the plurality of battery cells 121. A second side 123FS2 may be opposite to the first side 123FS1. The integrated circuit 123I may be mounted on the second side 123FS2.

The plurality of first terminal support portions 123FS may overlap the plurality of positive electrode terminals 121P, the plurality of negative electrode terminals 121N, and the plurality of sensing plates 123S in the Y-axis direction. The plurality of first terminal support portions 123FS may support the plurality of positive electrode terminals 121P, the plurality of negative electrode terminals 121N, and the plurality of sensing plates 123S.

Each of the plurality of first terminal support portions 123FS may include a first through-hole 123FT. Each of the plurality of first terminal support portions 123FS may include a first inside wall 123FW that defines the first through-hole 123FT. The first through-holes 123FT of each of the plurality of first terminal support portions 123FS may overlap the plurality of positive electrode terminals 121P and the plurality of negative electrode terminals 121N in the Y-axis direction. The first through-holes 123FT of each of the plurality of first terminal support portions 123FS may overlap the plurality of sensing plates 123S in the Y-axis direction.

According to embodiments, each of the first through-holes 123FT may completely penetrate a corresponding one of the first terminal support portions 123FS. According to embodiments, a height of the first through-hole 123FT in the Z-axis direction may be substantially the same as a height of each of the plurality of first terminal support portions 123FS in the Z-axis direction. Each of the plurality of first terminal support portions 123FS does not include a rib and thus the first inside wall 123FW of each of the plurality of first terminal support portions 123FS that defines the corresponding first through-hole 123FT may be solid.

The plurality of first interposed portions 123FI may overlap a plurality of ribs 123FR of the first insulating frame 123F in the Y-axis direction. The plurality of ribs 123FR are thin features and may be provided by an injection process. The plurality of ribs 123FR may be on the second side 123FS2 of the first insulating frame 123F. The plurality of ribs 123FR may prevent deformation of the first insulating frame 123F to increase mechanical strength of the first insulating frame 123F, prevent an increase in the weight of the first insulating frame 123F, and prevent a decrease in a cooling rate of an injection process of the first insulating frame 123F.

The first side 123FS1 of the first insulating frame 123F may be ribless. Each of the plurality of first terminal support portions 123FS and the plurality of first interposed portions 123FI may not include ribs. Accordingly, even when impact is transmitted to the battery cell assembly 120 in the Y-axis direction, damage to the plurality of battery cells 121 due to ribs can be prevented.

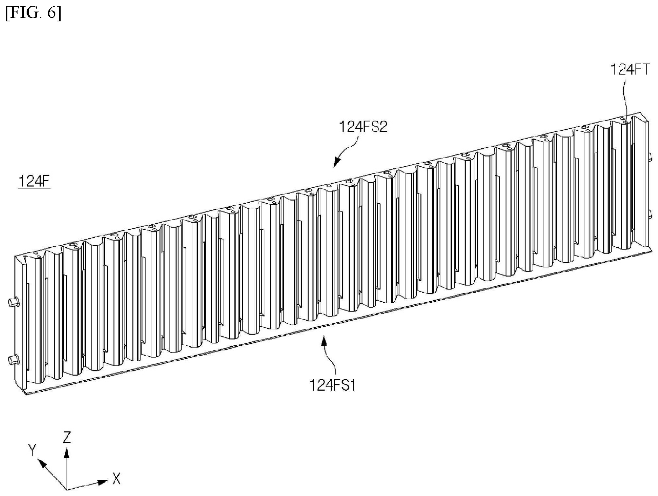

FIG. 6 is a perspective view of the second insulating frame 124F of the battery cell assembly 120.

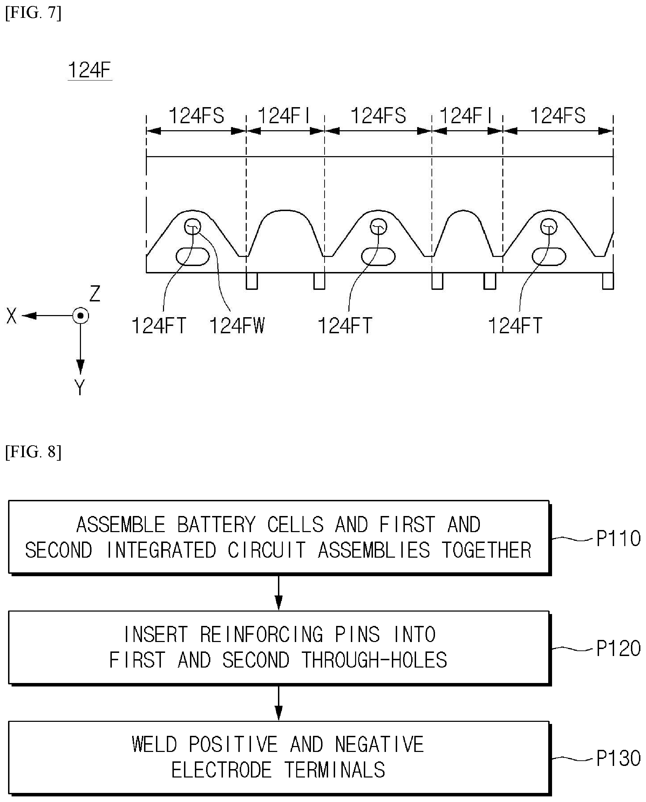

FIG. 7 is a plan view of the second insulating frame 124F of the battery cell assembly 120.

Referring to FIGS. 2, 6, and 7, the second insulating frame 124F may include a plurality of second terminal support portions 124FS and a plurality of second interposed portions 124FI. The plurality of second terminal support portions124FS may be arranged in the X-axis direction. The plurality of second interposed portions 124FI may be arranged in the X-axis direction. The plurality of second terminal support portions 124FS and the plurality of second interposed portions 124FI may be alternated in the X-axis direction. One of the plurality of second interposed portions 124FI may be interposed between two adjacent second terminal support portions 124FS. One of the second terminal support portions 124FS may be interposed between two adjacent second interposed portions 124FI.

The plurality of second support portions 124FS and the plurality of second interposed portions 124FI may be on a first side 124FS1 of the second insulating frame 124F. The first side 124FS1 may face the plurality of battery cells 121. The first side 124FS1 may face the pouch case 121C of each of the plurality of battery cells 121. A second side 124FS2 may be opposite to the first side 124FS1. An integrated circuit may be mounted on the second side 124FS2.

The plurality of second terminal support portions 124FS may overlap the plurality of positive electrode terminals 121P, the plurality of negative electrode terminals 121N, and the plurality of sensing plates in the Y-axis direction. The plurality of second terminal support portions 124FS may support the plurality of positive electrode terminals 121P, the plurality of negative electrode terminals 121N, and the plurality of sensing plates.

Each of the plurality of second terminal support portions 124FS may include a second through-hole 124FT. Each of the plurality of second terminal support portions 124FS may include a second inside wall 124FW that defines the second through-hole 124FT. The second through-holes 124FT of the plurality of second terminal support portions 124FS may overlap the plurality of positive electrode terminals 121P and the plurality of negative electrode terminals 121N in the Y-axis direction. The second through-holes 124FT of the plurality of second terminal support portions 124FS may overlap the plurality of sensing plates in the Y-axis direction.

According to embodiments, each of the second through-holes 124FT may completely penetrate a corresponding one of the second terminal support portions 124FS. According to embodiments, a height of the second through-hole 124FT in the Z-axis direction may be substantially the same as a height of each of the plurality of second terminal support portions 124FS in the Z-axis direction. Each of the plurality of second terminal support portions 124FS does not include a rib and thus the second inside wall 124FW of each of the plurality of second terminal support portions 124FS that defines the corresponding second through-hole 124FT may be solid.

The plurality of second interposed portions 124FI may overlap a plurality of ribs of the second insulating frame 124F in the Y-axis direction. The plurality of ribs may be on the second side 124FS2 of the second insulating frame 124F. The plurality of ribs may prevent deformation of the second insulating frame 124F to increase mechanical strength of the second insulating frame 124F, prevent an increase in the weight of the second insulating frame 124F, and prevent a decrease in a cooling rate of an injection process of the second insulating frame 124F.

The first side 124FS1 of the second insulating frame 124F may be ribless. Each of the plurality of second terminal support portions 124FS and the plurality of second interposed portions 124FI may not include ribs. Accordingly, even when impact is transmitted to the battery cell assembly 120 in the Y-axis direction, damage to the plurality of battery cells 121 due to ribs can be prevented.

FIG. 8 is a flowchart of a method of providing a battery cell assembly according to embodiments.

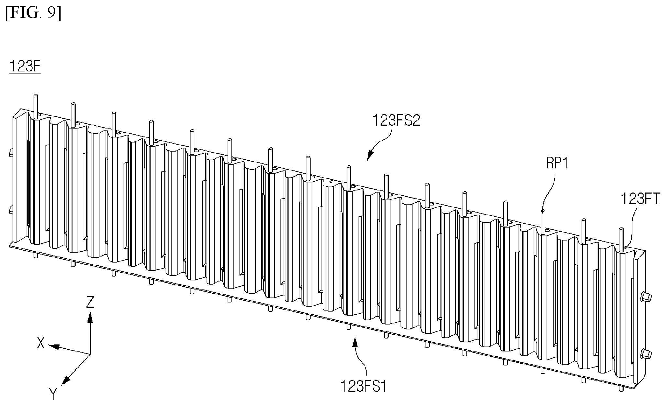

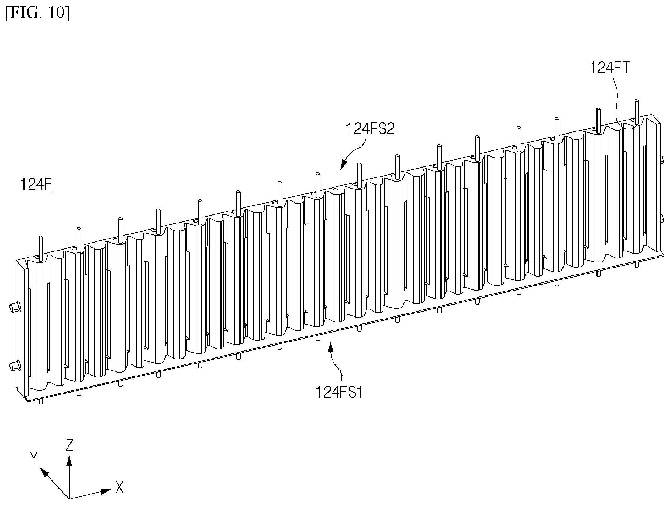

FIGS. 9 and 10 are perspective views for describing a method of providing a battery cell assembly according to embodiments.

Referring to FIGS. 8, 2, and 3, in P110, the plurality of battery cells 121 and the first and second integrated circuit assemblies 123 and 124 may be assembled together. In P110, the plurality of battery cells 121 may be arranged in the X-axis direction. In P110, the positive electrode terminals 121P and the negative electrode terminals 121N of the plurality of battery cells 121 may be inserted into slits of the first and second insulating frames 123F and 124F to be coupled to the first and second insulating frames 123F and 124F.

Referring to FIGS. 8 to 10, in P110, first reinforcing pins RP1 may be inserted into the first through-holes 123FT, and second reinforcing pins RP2 may be inserted into the second through-holes 124FT.

The first reinforcing pins RP1 may completely penetrate the first insulating frame 123F. A length of the first reinforcing pins RP1 in the Z-axis direction may be greater than a height of the first inside wall 123FW (see FIG. 5) defining the first through-holes 123FT in the Z-axis direction. The length of the first reinforcing pins RP1 in the Z-axis direction may be greater than a height of the first insulating frame 123F in the Z-axis direction. The second reinforcing pins RP2 may completely penetrate the second insulating frame 124F. A length of the second reinforcing pins RP2 in the Z-axis direction may be greater than a height of the second inside wall 124FW (see FIG. 7) defining the second through-holes 124FT in the Z-axis direction. The length of the second reinforcing pinsRP2 in the Z-axis direction may be greater than a height of the second insulating frame 124F in the Z-axis direction.

Thereafter, referring to FIGS. 2, 3 and 8, in P130, the positive electrode terminals 121P and the negative electrode terminals 121N may be welded together. The positive electrode terminals 121P and the negative electrode terminals 121N may be welded together based on ultrasonic waves or laser beams. The sensing plates 123S may be welded together with the positive electrode terminals 121P and the negative electrode terminals 121N.

According to embodiments, although the second side 123FS2 of the first insulating frame 123F and the second side 124FS2 of the second insulating frame 123F are rib-free, the first reinforcing pins RP1 are inserted into the first through-holes 123FT and the second reinforcing pins RP2 are inserted into the second through-holes 124FT, so that the first insulating frame 123F and the second insulating frame 124F may stably support the sensing plates 123S, the positive electrode terminals 121P, and the negative electrode terminals 121N during a welding process.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery cell assembly comprising:
a plurality of battery cells arranged in a first direction; and
an integrated circuit assembly covering the plurality of battery cells,
wherein the integrated circuit assembly includes an insulating frame including an insulating material, and an integrated circuit mounted on the insulating frame and configured to be electrically connected to the plurality of battery cells,
the insulating frame includes a first side facing the plurality of battery cells, and
the first side is rib-free.

2. The battery cell assembly of claim 1, wherein the insulating frame includes a plurality of terminal support portions that are on the first side and are arranged in the first direction, and
each of the plurality of terminal support portions includes a through-hole.

3. The battery cell assembly of claim 2, wherein each of the plurality of terminal support portions includes an inside wall defining the through-hole, and
the inside wall of each of the plurality of terminal support portions is solid.

4. The battery cell assembly of claim 2, wherein each of the plurality of battery cells includes a positive electrode terminal and a negative electrode terminal, and each of the plurality of terminal support portions overlaps the positive electrode terminal and the negative electrode terminal of corresponding ones of the plurality of battery cells in a second direction perpendicular to the first direction.

5. The battery cell assembly of claim 4, wherein a length of the through-hole in a third direction perpendicular to the first and second directions is the same as a length of each of the plurality of terminal support portions in the third direction.

6. The battery cell assembly of claim 2, wherein the insulating frame includes a plurality of interposed parts that are on the first side and alternated with the plurality of terminal support parts in the first direction.

7. The battery cell assembly of claim 6, wherein the integrated circuit assembly is mounted on a second side of the insulating frame opposite to the first side, and
the insulating frame includes a plurality of ribs on the second side.

8. The battery cell assembly of claim 7, wherein the plurality of ribs overlap the plurality of interposed portions.

9. A manufacturing method of a battery cell assembly, comprising:
assembling a plurality of battery cells and an integrated circuit assembly together;
inserting a reinforcing pin into a through-hole of an insulating frame of the integrated circuit assembly, wherein a length of the reinforcing pin is greater than a length of the insulating frame; and
welding positive electrode terminals and negative electrode terminals of the plurality of battery cells.

10. The manufacturing method of claim 9, wherein the plurality of battery cells are arranged in a first direction, and
the reinforcing pin overlaps the positive electrode terminals and the negative electrode terminals of the plurality of battery cells in a second direction perpendicular to the first direction.

11. A battery cell assembly comprising:
a plurality of battery cells arranged in a first direction;
a first integrated circuit assembly including a first insulating frame including an insulating material, and a first integrated circuit mounted on the first insulating frame and configured to be electrically connected to the plurality of battery cells; and
a second integrated circuit assembly including a second insulating frame including an insulating material, and a second integrated circuit mounted on the second insulating frame and configured to be electrically connected to the plurality of battery cells,
wherein the first insulating frame includes a first side facing the plurality of battery cells and a second side opposite to the first side,
the first side is rib-free,
the second insulating frame includes a third side facing the plurality of battery cells and a fourth side opposite to the third side, and
the third side is rib-free.

12. The battery cell assembly of claim 11, wherein the first insulating frame includes a plurality of first terminal support portions that are on the first side and are arranged in the first direction,
each of the plurality of first terminal support portions includes a first through-hole,
the second insulating frame includes a plurality of second terminal support portions that are on the third side and are arranged in the first direction, and
each of the plurality of second terminal support portions includes a second through-hole.

13. The battery cell assembly of claim 12, wherein each of the plurality of first terminal support portions includes a first inside wall defining the first through-hole,
the first inside wall of each of the plurality of first terminal support portions is solid,
each of the plurality of second terminal support portions includes a second inside wall defining the second through-hole, and
the second inside wall of each of the plurality of second terminal support portions is solid.

14. The battery cell assembly of claim 12, wherein the first and second integrated circuit assemblies are spaced apart from each other in a second direction perpendicular to the first direction,
each of the plurality of battery cells includes a positive electrode terminal and a negative electrode terminal, and
each of the plurality of first and second terminal support portions overlaps the positive electrode terminal and the negative electrode terminal of corresponding ones of the plurality of battery cells in the second direction perpendicular to the first direction.

15. The battery cell assembly of claim 14, wherein a length of the first through-hole in a third direction perpendicular to the first and second directions is the same as a length of each of the plurality of first terminal support portions in the third direction, and
a length of the second through-hole in the third direction is the same as a length of each of the plurality of second terminal support portions in the third direction.
